# EUROPÄISCHE PATENTSCHRIFT

(11) **EP 3 925 777 B1**
(45) Veröffentlichungstag und Bekanntmachung des Hinweises auf die Patenterteilung: **15.04.2026**
(21) Anmeldenummer: 21178857.5
(22) Anmeldetag: 10.06.2021
(51) Int. Cl.: B32B 39/00, B32B 38/18

(54) **VORRICHTUNG ZUR HERSTELLUNG VON SANDWICHELEMENTEN UND ENTSPRECHENDE VERWENDUNG**
DEVICE FOR MANUFACTURING SANDWICH ELEMENTS AND CORRESPONDING USE
DISPOSITIF DE FABRICATION D'ÉLÉMENTS SANDWICH ET UTILISATION CORRESPONDANTE

(30) Priorität: 16.06.2020 DE 102020115874
(43) Veröffentlichungstag der Anmeldung: 22.12.2021
(73) Patentinhaber: OTech GmbH, 77855 Achern-Grossweier (DE)
(72) Erfinder: Oberle, Reiner, 77704 Oberkirch (DE)
(74) Vertreter: Mertzlufft-Paufler, Cornelius

(56) Entgegenhaltungen:
- EP-A1- 3 037 248
- EP-B1- 0 478 051
- WO-A2-2011/088871
- DE-A1- 102019 117 679
- DE-U1- 202016 000 761

## Beschreibung

Die Erfindung betrifft eine Vorrichtung, die zur Herstellung von Sandwichelementen für Fahrzeugteile eingerichtet ist, umfassend einen Unterbau, wenigstens eine Fördervorrichtung und wenigstens zwei Prozesseinheiten zur Ausführung von Herstellungsschritten eines Sandwichelementes.

DE 10 2019 117 679 A1 offenbart einen Überziehtisch mit einer Belegeeinheit, die mittels eines Fahrantriebs wenigstens zwischen einem Legebereich und einem Übergabebereich verstellbar ist. Der Überziehtisch ist durch eine Abschiebeeinheit gekennzeichnet, die wenigstens einen auf einer Belegfläche der Belegeeinheit angeordneten Abschiebeanschlag aufweist, der derart eingerichtet ist, dass er ortsfest verbleibt, wenn die Belegeeinheit aus dem Übergabebereich in den Legebereich verstellt wird.

DE 20 2016 000 761 U1 offenbart eine Fördervorrichtung mit zumindest zwei zueinander parallel verlaufenden Förderbändern zum Befördern eines Werkstücks, wobei ein Abstand zwischen den zumindest zwei Förderbändern einstellbar ist.

EP 3 037 248 A1 offenbart ein Verfahren zur Herstellung eines Sandwichbauteils gemäß den folgenden Schritten:
Bereitstellen mehrerer Materialbahnen, Aufbringen zumindest eines Matrixmaterials auf die Ober- und/oder Unterseite zumindest einer der Materialbahnen, wobei auf zumindest zwei der Materialbahnen in unterschiedlicher Weise Matrixmaterial aufgebracht wird und/oder auf zumindest eine der Materialbahnen entlang deren Ober- und/oder Unterseite in unterschiedlicher Weise Matrixmaterial aufgebraucht wird, Anordnen zumindest einer Kernschicht auf einer der Materialbahnen, und Verpressen der Materialbahnen und der Kernschicht zu dem Sandwichbauteile, wobei die Kernschicht zwischen zumindest zwei der Materialbahnen angeordnet ist.

WO 2011/088871 A2 offenbart ein Sandwichbauteil umfassend einen Wabenkern mit einer Vielzahl von Stegen und mindesteiner Deckschicht, wobei der Wabenkern aus einem auf Cellulose basiertem Material, insbesondere Papier, besteht, dadurch gekennzeichnet, dass die Deckschicht aus einem faserverstärkten Halbzeug mit einer thermoplastischen Kunststoffmatrix gebildet wird, wobei die Stege des Wabenkerns an Anschlussstellen zu der Deckschichtwesens teilweise in die thermoplastischen Kunststoffmatrix der Deckschicht aufgenommen sind, sodass ein Verbund des Sandwichbauteils bereitgestellt wird.

EP 0 478 051 B1 offenbart ein Verfahren zur Herstellung eines für Leiterplatten bestimmten flachen Substrates aus einer faserverstärkten Matrix in einem kontinuierlichen Verfahren, bei dem mindestens zwei bewegte Lagen von Verstärkungsfäden verwendet und die Fäden in mindestens zwei sich überkreuzenden Richtungen angeordnet sind, wonach die Lagen der mit Matrixmaterial versehenen Fäden durch eine vorzugsweise erhitzte Laminierzone, wie eine Doppelbandpresse, geführt und das Laminat auf einer oder beiden Seite(n) mit Mitteln zur Abscheidung von elektrisch leitfähigen Spuren, z.B. zur Abscheidung einer Kupferfolie, die durch Ätzen dann teilweise entfernt werden kann, auf dem Laminat. Das vorbekannte Verfahren ist dadurch gekennzeichnet, dass Fäden enthaltende Schichten aus einer Mehrzahl von zueinander parallelen Fäden verwendet werden, die nicht in Form eines Gewebes gebunden sind und sich im Wesentlichen geradlinig erstrecken.

Vorrichtungen eingangs genannter Art kommen beispielswiese zur Herstellung von Sandwichelementen zum Einsatz, die dann im Wohnmobilbau verwendet werden. Damit einhergehend sind häufig recht große Abmessungen in Länge und Breite der Sandwichelemente, weshalb auch die Vorrichtungen selbst verhältnismäßig viel Platz in Fertigungsräumen in Anspruch nehmen. Vorbekannte Vorrichtungen weisen regelmäßig stationäre Prozesseinheiten auf, die ortsfest und unverstellbar neben und/oder oberhalb einer Fördervorrichtung installiert sind. Damit ein Arbeiter direkt an der Vorrichtung einen Arbeitsschritt durchführen kann, muss somit zusätzlicher Arbeitsplatz für den Arbeiter freigehalten werden, was den gesamten Platzbedarf zusätzlich erhöht.

Neben dem Platzbedarf für die Prozesseinheiten besteht daher auch häufig ein Zugangsproblem, da die Prozesseinheiten einen direkten Zugang zur Fördervorrichtung versperren oder zumindest erschweren. Die Fördervorrichtung selbst ist häufig ebenfalls stationär ausgebildet. Zur Übergabe eines auf der Fördervorrichtung gefertigten Bauteils an die nächste Bearbeitungsstelle sind daher häufig Übergabebrücken oder dergleichen erforderlich, die an den Stirnseiten, also den Enden der Fördervorrichtung ausgebildet sind. Durch die Ausbildung der Übergabebrücken entsteht jedoch ein zusätzlicher Platzbedarf bzw. die Übergabebrücken müssen umklappbar ausgebildet werden, um Durchgangswege freigeben zu können. Damit steigen auch die Kosten der Vorrichtung.

Es besteht somit die Aufgabe, eine Vorrichtung zur Herstellung von Sandwichelementen zu schaffen, die gegenüber gattungsgleichen Vorrichtungen verbesserte Gebrauchseigenschaften aufweist.

Die Lösung dieser Aufgabe wird erfindungsgemäß durch eine Vorrichtung mit den Merkmalen nach Anspruch 1 bereitgestellt. Insbesondere wird erfindungsgemäß zur Lösung der Aufgabe eine Vorrichtung eingangs genannter Art vorgeschlagen, die dadurch gekennzeichnet ist, dass die wenigstens zwei Prozesseinheiten und/oder die wenigstens eine Fördervorrichtung relativ zu dem Unterbau verfahrbar sind/ist. Dies hat den Vorteil, dass es möglich ist, die Prozesseinheiten und/oder die Fördervorrichtung in ihrer Position zu verändern, um dadurch zumindest temporär Platz zu schaffen. Der Platz kann beispielsweise als Durchgangsweg und/oder als Zugang für einen Arbeiter und/oder Werkzeug erforderlich sein. Beispielsweise kann es vorkommen, dass ein Arbeiter für die Durchführung eines Arbeitsschrittes bei der Herstellung eines Sandwichelementes möglichst nahe an die Fördervorrichtung, auf welcher das Sandwichelement oder die Bauteile für dessen Herstellung liegen, herantreten können muss. Durch die erfindungsgemäße Ausgestaltung der Vorrichtung ist diese gegenüber vorbekannten gattungsgleichen Vorrichtungen flexibler ausgestaltet. Somit ist eine besonders platzsparende Anordnung der Vorrichtung möglich, da vorhandener Raum effizienter nutzbar ist, indem die Prozesseinheiten und/oder die Fördervorrichtung verstellbar (also nicht ortsfest) sind, um den durch diese belegten Raum auch anderweitig nutzbar zu machen.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Gemäß einer vorteilhaften Weiterbildung können die wenigstens zwei Prozesseinheiten relativ zueinander verfahrbar sein. Somit kann einerseits eine noch effizientere Ausnutzung eines vorhandenen Raumes erreicht werden. Wird zum Beispiel an einer Stelle der Fördervorrichtung durch eine erste Prozesseinheit ein Arbeitsprozess eines Herstellungsverfahrens ausgeführt, so kann die zweite Prozesseinheit dorthin verfahren werden, wo sie zu diesem Zeitpunkt nicht stört oder sie kann flexibel an eine Stelle eines auf der Fördervorrichtung platzierten Werkstücks verfahren werden, um dort die ihr zugeordneten Arbeitsprozesse durchzuführen. Zudem kann somit auch die Funktionalität der Vorrichtung erweitert werden, da komplexere Prozessabläufe möglich sind.

Um eine besonders kontrollierte Verstellung der Prozesseinheiten vornehmen zu können, ist erfindungsgemäß vorgesehen, dass die wenigstens zwei Prozesseinheiten auf einer Führungseinrichtung des Unterbaus verstellbar geführt sind.

Ein Großteil des erforderlichen Platzes einer gattungsgemäßen Vorrichtung wird für die Fördervorrichtung gebraucht, die in der Regel die größte Ausdehnung aufweist. Gemäß einer weiteren vorteilhaften Ausgestaltung kann es daher vorgesehen sein, dass die wenigstens eine Fördervorrichtung auf einer Führungseinrichtung, beispielsweise einer weiteren Führungseinrichtung des Unterbaus oder der bereits genannten Führungseinrichtung des Unterbaus, verstellbar geführt ist. Somit kann auch die Fördervorrichtung in ihrer Position besonders einfach, insbesondere durch manuelle Kraftaufbringung durch wenigstens einen Nutzer, geändert werden. Insbesondere ist es dadurch möglich, an den Enden der Fördervorrichtungen Freiräume schaffen zu können, die dann als Durchgänge nutzbar sind. So kann insbesondere auf Übergabebrücken verzichtet werden, da eine Übergabe eines Werkstücks an eine nachgelagerte Bearbeitungsstation durch die Positionsverstellung der Fördervorrichtung möglich ist.

Erfindungsgemäß ist vorgesehen, dass wenigstens eine der Prozesseinheiten als eine Abcoilanlage und/oder als eine Klebstoffauftragungsanlage ausgebildet ist. Alternativ oder ergänzend kann es vorgesehen sein, dass die wenigstens eine Fördervorrichtung als ein Förderband, vorzugsweise als ein Gurtförderband, ausgebildet ist.

Durch eine Abcoilanlage kann zumindest eine Schicht wenigstens eines zum Sandwichelement zu verarbeitenden Materials bereitgestellt werden. Beispielsweise kann die Abcoilanlage wenigstens ein als Rolle ausgebildetes Materiallager aufweisen, wobei auf der Rolle das zu verarbeitende Material aufgewickelt ist und zur Verarbeitung einfach davon abgezogen werden kann. Bislang war es erforderlich, dass ein Arbeiter das Material von der Rolle abzieht. Durch die Verstellbarkeit der Abcoilanlage kann das Material nun positionsgenauer, und vorzugsweise automatisiert, abgezogen werden.

Durch die Verstellbarkeit der Abcoilanlage kann eine Materialbahn also einfacher auf die Fördervorrichtung platziert werden, da die Abcoilanlage zunächst in eine Anfangsposition verfahrbar ist und dann entlang einer Ablagefläche der Fördervorrichtung verstellt werden kann. Während der Verstellung der Abcoilanlage kann eine besonders positionsgenaue Abwicklung des zu verarbeitenden Materials erfolgen, insbesondere ohne dass eine Nachjustierung des Materials auf der Ablagefläche notwendig ist. Alternativ oder ergänzend kann die Abcoilanlage wenigstens ein Schneidewerkzeug aufweisen, um das Material auf eine gewünschte Länge zuschneiden zu können. Das Material kann beispielsweise soweit wie erforderlich von der Rolle abgewickelt und dann insbesondere bahnenweise geschnitten werden. Von der Abcoilanlage kann beispielsweise PVC als Ausgangsmaterial abgezogen werden.

Durch eine Klebstoffauftragungsanlage kann anschließend auf eine auf der Ablagefläche der Fördervorrichtung platzierte Materialbahn ein Klebstoff aufgetragen werden, wobei auch hier die Klebstoffauftragungsanlage aus einer Anfangsposition über die Materialbahn verfahrbar ist, so dass eine besonders einfache Auftragung von Klebstoff möglich ist. Anschließend kann eine weitere Materialbahn auf die erste, mit Klebstoff versehene Materialbahn aufgebracht werden, um einen für Sandwichelemente typischen Schichtaufbau auszubilden.

Es kann weiter vorgesehen sein, dass die beiden Prozesseinheiten so verfahrbar sind, dass jede Prozesseinheit zumindest entlang der kompletten Ablagefläche verstellbar ist. Vorzugsweise kann wenigstens eine der Prozesseinheiten über die Ablagefläche hinaus verstellt werden, um so zu ermöglichen, dass die insbesondere in der gleichen Führungseinrichtung geführten Prozesseinheiten, jeweils die komplette Ablagefläche erfassen.

Um eine ungewollte Verstellung der Fördervorrichtung insbesondere während der Durchführung eines Arbeitsprozesses zu verhindern, kann es gemäß einer vorteilhaften Weiterbildung vorgesehen sein, dass die Vorrichtung wenigstens eine Feststellbremse aufweist, so dass die wenigstens eine Fördervorrichtung und/oder wenigstens eine der Prozesseinheiten gegenüber dem Unterbau verstellsicher fixierbar ist.

Zur vereinfachten Verstellung der Prozesseinheiten kann es vorgesehen sein, dass die Vorrichtung wenigstens einen Antrieb zur motorisierten Verstellung einer der Prozesseinheiten oder der wenigstens zwei Prozesseinheiten aufweist. Insbesondere kann der wenigstens eine Antrieb an der Prozesseinheit und/oder ortsfest ausgebildet sein. Vorzugsweise kann er am Unterbau stationär angeordnet sein. Zum Beispiel kann es sich bei dem Antrieb um einen Elektromotor handeln.

Gemäß einer vorteilhaften Weiterbildung kann es vorgesehen sein, dass wenigstens eine der Prozesseinheiten und/oder die wenigstens eine Fördervorrichtung einen Führungswagen aufweisen/aufweist, der entlang einer als Linearführung ausgebildeten Führungseinrichtung, insbesondere entlang einer Kugellaufführung, des Unterbaus verschieblich geführt ist. Somit ist eine besonders einfache und verschleißarme Verstellung möglich.

Gemäß einer besonders vorteilhaften Weiterbildung kann es vorgesehen sein, dass wenigstens eine der Prozesseinheiten mit einem Spiel auf eine oder die Führungseinrichtung des Unterbaus aufgesetzt ist. Insbesondere kann die wenigstens eine Prozesseinheit auf dem Unterbau schwerkraftgehalten sein.

Um eine besonders kostengünstige und variabel einsetzbare Längenmessung vornehmen zu können, kann die Vorrichtung eine absolute Messvorrichtung aufweisen, um einen Verstellungsweg wenigstens einer Prozesseinheit und/oder der Fördervorrichtung relativ zum Unterbau zu bestimmen. Insbesondere kann die Vorrichtung wenigstens ein Lasermessgerät aufweisen.

Die Erfindung betrifft zudem die Verwendung einer Vorrichtung, wie sie hierin beschrieben und/oder beansprucht ist, zur Herstellung von Sandwichelementen, insbesondere von Sandwichelementen von Fahrzeugen, vorzugsweise von Wohnmobilen. Die Vorrichtung weist den Vorteil auf, dass sie in bestehende Fertigungsstraßen eingliederbar ist. Somit ist ein einfaches Nachrüsten von Fertigungsstraßen möglich, ohne dass übrige Bearbeitungsanlagen, die der Vorrichtung vor oder nachgelagert sind, ausgetauscht werden müssen.

Die Erfindung wird nun anhand eines Ausführungsbeispiels näher beschrieben, ist jedoch nicht auf dieses Ausführungsbeispiel beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: eine perspektivische Ansicht einer möglichen Ausführungsvariante einer erfindungsgemäßen Vorrichtung zur Herstellung von Sandwichelementen,
- Fig. 2: eine Detailansicht auf den Unterbau und die Führungseinrichtungen einer Ausführungsvariante einer erfindungsgemäßen Vorrichtung zur Herstellung von Sandwichelementen,
- Fig. 3: eine Seitenansicht einer Ausführungsvariante einer erfindungsgemäßen Vorrichtung zur Herstellung von Sandwichelementen,
- Fig. 4: eine Frontansicht einer Ausführungsvariante einer erfindungsgemäßen Vorrichtung zur Herstellung von Sandwichelementen.

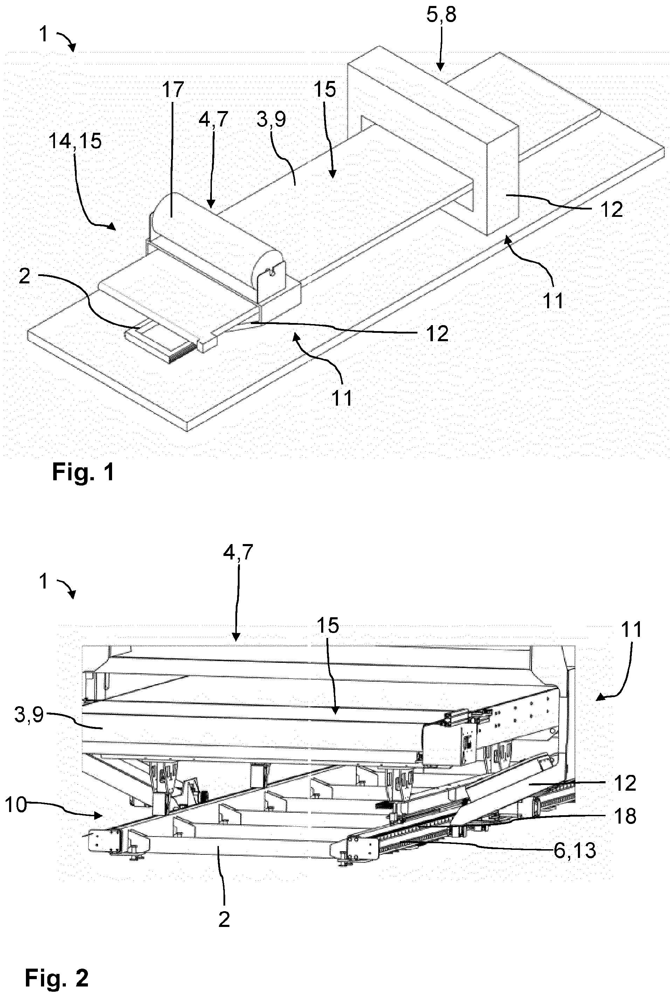

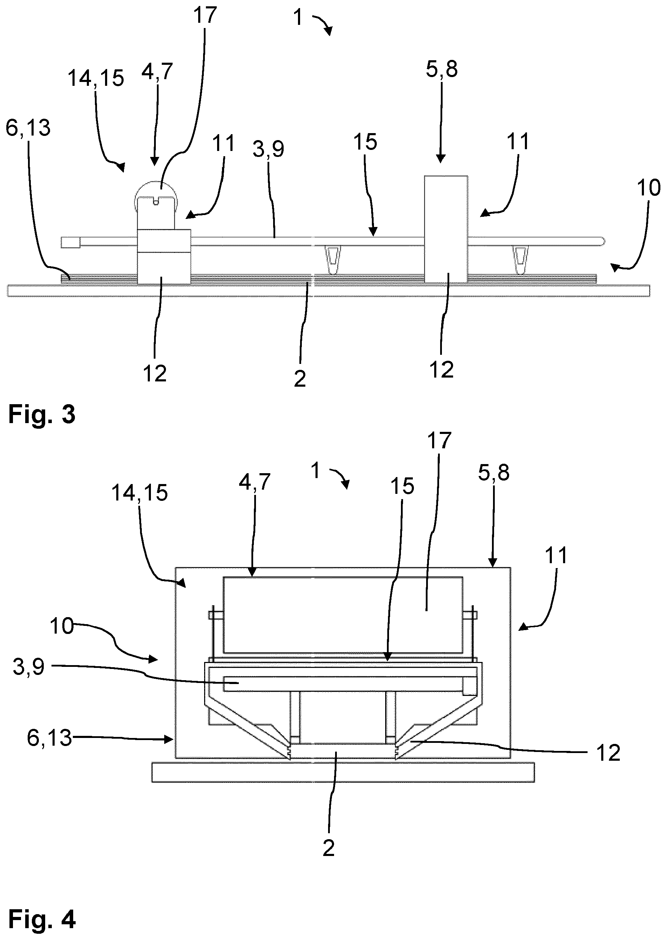

Die Fig. 1-4 zeigen eine mögliche Ausführungsvariante einer Herstellungsvorrichtung für Sandwichelemente, die im Ganzen als 1 bezeichnet ist.

Die Vorrichtung 1 weist einen Unterbau 2 auf, der als Träger und/oder als Führung für darauf aufgesetzte Bauteile dient.

Zur Durchführung von Arbeitsprozessen für die Herstellung von Sandwichelementen weist die Vorrichtung 1 wenigstens zwei Prozesseinheiten 4, 5 auf, die vorzugsweise zur Durchführung unterschiedlicher Arbeitsprozesse eingerichtet sind.

Die Vorrichtung 1 weist weiter eine Fördervorrichtung 3 auf, auf welcher das Sandwichelement wenigstens teilweise gefertigt wird. Nachfolgend wird das unfertige oder fertige Sandwichelement auch als Werkstück bezeichnet.

Die beiden Prozesseinheiten 4, 5 sind getrennt voneinander auf dem Unterbau 2 verfahrbar geführt. Somit ist es möglich, jede der Prozesseinheiten 4, 5 unabhängig von der weiteren Prozesseinheit 4, 5 relativ zum Unterbau 2 und relativ zu der Fördervorrichtung 3 in der Position zu verstellen.

Die Fördervorrichtung 3 ist ebenfalls auf dem Unterbau 2 verführbar geführt. Somit ist es möglich, eine Ablagefläche 16 der Fördervorrichtung 3, auf welcher das Werkstück während der Bearbeitung liegt, in seiner Position relativ zum Unterbau 2 und relativ zu den Prozesseinheiten 4, 5 zu verstellen, ohne dass die Fördervorrichtung 3 in Betrieb genommen ist. Die Ablagefläche 16 kann durch ein Förderband ausbildet sein. Somit kann die Ablagefläche 16 des Förderbands zusätzlich entlang wenigstens eines Förderweges bewegt werden, so dass das Werkstück entlang wenigstens einer Förderrichtung in seiner Position bewegbar ist, insbesondere obwohl die Fördervorrichtung 3 ortsfest verbleibt, also nicht relativ zum Unterbau 2 verstellt wird.

Durch die getrennte Anordnung der wenigstens zwei Prozesseinheiten 4, 5 auf dem Unterbau 2 ist es möglich, diese auch relativ zueinander zu verstellen. Vorzugsweise können die beiden Prozesseinheiten 4, 5 mindestens entlang der kompletten Ablagefläche 16 verstellt werden. So kann es beispielsweise vorgesehen sein, dass wenigstens eine Prozesseinheit 4, 5 an einer beliebigen Position oberhalb der Ablagefläche 16 platzierbar ist.

Der Unterbau 2 weist zumindest eine Führungseinrichtung 6 auf, die dazu eingerichtet ist, die Prozesseinheiten 4, 5 verfahrbar zu führen und/oder deren Abstand relativ zum Unterbau 2 festzulegen. Die Führungseinrichtung 6 kann zum Beispiel als eine Linearführung 13, vorzugsweise als eine Kugellaufführung, ausgebildet sein.

Die Fördervorrichtung 3 ist auf einer weiteren Führungseinrichtung 6 des Unterbaus aufgesetzt und verstellbar geführt. Die weitere Führungseinrichtung 6 kann zum Beispiel als eine Linearführung 13, vorzugsweise als eine Kugellaufführung oder eine Schienenführung, ausgebildet sein. Somit ist auch ein besonders leichtgängiges Verstellen der Fördervorrichtung 3 möglich, so dass sie zum Beispiel durch einen Arbeiter manuell verschiebbar ist.

Eine erste Prozesseinheit 4 kann als eine Abcoilanlage 7 ausgebildet sein. Die Abcoilanlage 7 kann wenigstens eine Rolle 17 aufweisen, auf welcher ein zu verarbeitendes Material aufgezogen ist. Durch Abwickeln der Rolle 17 und gleichzeitiges Verstellen der Abcoilanlage 7 relativ zur Ablagefläche 16 kann das Material abgerollt und auf der Ablagefläche 16 platziert werden.

Eine zweite Prozesseinheit 5 kann als eine Klebstoffauftragungsanlage 8 ausgebildet sein, die dazu eingerichtet ist, Klebstoff von oben auf ein auf der Ablagefläche 16 aufgelegtes zu verarbeitendes Material und/oder ein Werkstück aufzutragen.

Die Fördervorrichtung 3 kann als ein Förderband, insbesondere als ein Gurtförderband 9 ausgebildet sein.

Die Verstellung der wenigstens zwei Prozesseinheiten 4, 5 und/oder der Fördervorrichtung 3 erfolgt jeweils entlang eines durch die Führungseinrichtung 6 definierten Verstellweges und/oder in einer dadurch definierten Verstellrichtung. Der Verstellweg und/oder die Verstellrichtung können/kann geradlinig, insbesondere in oder entgegen einer Förderrichtung der Fördervorrichtung 3, ausgelegt sein.

Um ein ungewolltes Verstellen der Fördervorrichtung 3 verhindern zu können, weist die Vorrichtung 1 wenigstens eine Feststellbremse 10 auf. Somit kann die Fördervorrichtung 3 nach einer Verstellung in einer gewünschten Position lösbar fixiert werden.

Die Prozesseinheiten 4, 5 können ebenfalls jeweils eine Feststellbremse 10 aufweisen, um ein ungewolltes Verstellen insbesondere während der Durchführung eines Arbeitsprozesses verhindern zu können. Im Falle einer motorisierten Verstellung kann eine Bremskraft jedoch auch über einen Antrieb 11 erzeugbar sein.

Zur vereinfachten Verstellung der Prozesseinheiten 4, 5 kann die Vorrichtung daher wenigstens einen Antrieb 11, insbesondere pro Prozesseinheit 4, 5 einen Antrieb 11, aufweisen, mittels welchem eine motorisierte Verstellung der jeweilig angetriebenen Prozesseinheit 4, 5 gegenüber dem Unterbau 2 möglich ist.

Der Antrieb 11 kann dabei beispielsweise an der Prozesseinheit 4, 5 ausgebildet sein und zusammen mit dieser verstellt werden. Alternativ kann der Antrieb 11 auch am Unterbau 2 stationär ausgebildet sein.

Der Antrieb 11 oder die Antriebe 11 können in einer Wirkverbindung mit einer Zahnstange 18 vorzugsweise am Unterbau 2 stehen, insbesondere um eine Verstellung der Prozesseinheiten 4, 5 entlang der Zahnstange 18 vornehmen zu können.

Jede Prozesseinheit 4, 5 weist wenigstens einen Führungswagen 12 auf, der auf die wenigstens eine Führungseinrichtung 6 des Unterbaus 2 aufgesetzt ist, so dass die Prozesseinheit 4, 5 über den Führungswagen entlang der Führungseinrichtung 6 verstellbar geführt ist. Jede Prozesseinheit 4, 5 kann vorzugsweise beidseitig von der Fördervorrichtung 3 abgestützt und verstellbar geführt sein. Somit ist eine kippsichere Lagerung möglich.

Zwischen dem Führungswagen 12 und der Führungseinrichtung 6 kann ein Spiel ausgebildet sein, so dass ein möglichst verschleißarmes Verstellen möglich ist. Die Prozesseinheit 4, 5 kann auf der Führungseinrichtung 6 schwerkraftgehalten sein, vorzugsweise so dass sie theoretisch von der Führungseinrichtung 6 abhebbar ist. Dies hat zudem den Vorteil, dass die Prozesseinheit 4, 5 an den Kontaktflächen unbearbeitet aufsetzbar ist, was die Herstellungskosten reduziert.

Die Vorrichtung 1 weist zudem eine vorzugsweise als Lasermessgerät 15 ausgebildete absolute Messvorrichtung 14 auf, um eine direkte Längenmessung durchführen zu können. Dadurch kann beispielsweise ein Verstellweg einer Prozesseinheit 4, 5 und/oder eine Länge einer von der Abcoilanlage 7 abgezogenen Materialbahn bestimmt werden.

Die Erfindung betrifft also insbesondere eine Vorrichtung 1 zur Herstellung von Sandwichelementen, insbesondere für Wohnmobilteile, umfassend einen Unterbau 2 als Träger- und Führungsgestell, wenigstens eine auf den Unterbau 2 aufgesetzte Fördervorrichtung 3 und wenigstens zwei ebenfalls auf den Unterbau 2 aufgesetzte Prozesseinheiten 4, 5 zur Ausführung von Herstellungsschritten eines Sandwichelementes, wobei die wenigstens zwei Prozesseinheiten 4, 5 und/oder die wenigstens eine Fördervorrichtung 3 relativ zu dem Unterbau 2 verfahrbar sind/ist.

### Bezugszeichenliste

- 1: Vorrichtung
- 2: Unterbau
- 3: Fördervorrichtung
- 4: Erste Prozesseinheit
- 5: Zweite Prozesseinheit
- 6: Führungseinrichtung
- 7: Abcoilanlage
- 8: Klebstoffauftragungsanlage
- 9: Gurtförderband
- 10: Feststellbremse
- 11: Antrieb
- 12: Führungswagen
- 13: Linearführung, wie beispielsweise Kugellaufführung
- 14: Messvorrichtung
- 15: Lasermessgerät
- 16: Ablagefläche
- 17: Rolle
- 18: Zahnstange

## Patentansprüche

1. Vorrichtung (1), eingerichtet zur Herstellung von Sandwichelementen für Fahrzeugteile, umfassend einen Unterbau (2), wenigstens eine Fördervorrichtung (3) und wenigstens zwei Prozesseinheiten (4, 5) zur Ausführung von Herstellungsschritten eines Sandwichelementes, wobei wenigstens eine der Prozesseinheiten (4, 5) als eine Abcoilanlage (7) und/oder wenigstens eine der Prozesseinheiten (4, 5) als eine Klebstoffauftragungsanlage (8) ausgebildet ist, und wobei
die wenigstens zwei Prozesseinheiten (4, 5) relativ zu dem Unterbau (2) verfahrbar sind, wobei die wenigstens zwei Prozesseinheiten (4, 5) auf einer Führungseinrichtung (6) des Unterbaus (2) verstellbar geführt sind.

2. Vorrichtung (1) nach Anspruch 1, **dadurch gekennzeichnet, dass** die wenigstens zwei Prozesseinheiten (4, 5) relativ zueinander verfahrbar sind.

3. Vorrichtung (1) nach einem der vorstehenden Ansprüche, **dadurch gekennzeichnet, dass** das die wenigstens eine Fördervorrichtung (3) auf einer oder der Führungseinrichtung (6) des Unterbaus (2) verstellbar geführt ist.

4. Vorrichtung (1) nach einem der vorstehenden Ansprüche, **dadurch gekennzeichnet, dass** die wenigstens eine Fördervorrichtung (3) als ein Gurtförderband (9) ausgebildet ist.

5. Vorrichtung (1) nach einem der vorstehenden Ansprüche, **dadurch gekennzeichnet, dass** die Vorrichtung (1) wenigstens eine Feststellbremse (10) aufweist, so dass die wenigstens eine Fördervorrichtung (3) und/oder wenigstens eine der Prozesseinheiten (4, 5) gegenüber dem Unterbau (2) verstellsicher fixierbar ist.

6. Vorrichtung (1) nach einem der vorstehenden Ansprüche, **dadurch gekennzeichnet, dass** die Vorrichtung (1) wenigstens einen Antrieb (11) zur motorisierten Verstellung einer der Prozesseinheiten (4, 5) oder der wenigstens zwei Prozesseinheiten (4, 5) mittels des Antriebs (11) aufweist, insbesondere wobei der Antrieb (11) an der Prozesseinheit (4, 5) oder ortsfest ausgebildet ist, vorzugsweise am Unterbau (2) stationär angeordnet ist.

7. Vorrichtung (1) nach einem der vorstehenden Ansprüche, **dadurch gekennzeichnet, dass** wenigstens eine der Prozesseinheiten (4, 5) und/oder die wenigstens eine Fördervorrichtung (3) einen Führungswagen (12) aufweisen/aufweist, der entlang einer Kugellaufführung (13) des Unterbaus (2) verschieblich geführt ist.

8. Vorrichtung (1) nach einem der vorstehenden Ansprüche, **dadurch gekennzeichnet, dass** wenigstens eine der Prozesseinheiten (4, 5) mit einem Spiel auf eine oder die Führungseinrichtung (6) des Unterbaus (2) aufgesetzt ist, insbesondere derart, dass die wenigstens eine Prozesseinheit (4, 5) schwerkraftgehalten ist.

9. Vorrichtung (1) nach einem der vorstehenden Ansprüche, **dadurch gekennzeichnet, dass** die Vorrichtung (1) eine absolute Messvorrichtung (14) aufweist, um einen Verstellungsweg wenigstens einer Prozesseinheit (4, 5) und/oder der Fördervorrichtung (3) relativ zum Unterbau (2) zu bestimmen, insbesondere wenigstens ein Lasermessgerät (15).

10. Vorrichtung (1) nach einem der voranstehenden Ansprüche, **dadurch gekennzeichnet, dass** die wenigstens eine Fördervorrichtung (3) relativ zu dem Unterbau (2) verfahrbar ist.

11. Verwendung einer Vorrichtung (1) nach einem der vorstehenden Ansprüche zur Herstellung von Sandwichelementen von Fahrzeugen.

## Claims

1. Device (1), configured for producing sandwich elements for vehicle parts, comprising a substructure (2), at least one conveyor device (3), and at least two processing units (4, 5) for carrying out production steps of a sandwich element, wherein at least one of the processing units (4, 5) is designed as an uncoiling system (7) and/or at least one of the processing units (4, 5) is designed as an adhesive application system (8), and wherein the at least two processing units (4, 5) are movable relative to the substructure (2), wherein the at least two processing units (4, 5) are guided to be adjustable on a guide unit (6) of the substructure (2).

2. Device (1) as claimed in claim 1, **characterized in that** the at least two processing units (4, 5) are movable relative to one another.

3. Device (1) as claimed in any one of the preceding claims, **characterized in that** the at least one conveyor device (3) is guided to be adjustable on a or the guide unit (6) of the substructure (2).

4. Device (1) as claimed in any one of the preceding claims, **characterized in that** the at least one conveyor device (3) is designed as a belt conveyor (9).

5. Device (1) as claimed in any one of the preceding claims, **characterized in that** the device (1) has at least one parking brake (10), so that the at least one conveyor device (3) and/or at least one of the processing units (4, 5) is fixable in relation to the substructure (2) so it is secured against adjustment.

6. Device (1) as claimed in any one of the preceding claims, **characterized in that** the device (1) has at least one drive (11) for the motorized adjustment of one of the processing units (4, 5) or the at least two processing units (4, 5) by means of the drive (11), in particular wherein the drive (11) is formed on the processing unit (4, 5) or fixed in place, preferably is arranged stationary on the substructure (2).

7. Device (1) as claimed in any one of the preceding claims, **characterized in that** at least one of the processing units (4, 5) and/or the at least one conveyor device (3) have/has a guide carriage (12), which is guided to be displaceable along a ball track guide (13) of the substructure (2).

8. Device (1) as claimed in any one of the preceding claims, **characterized in that** at least one of the processing units (4, 5) is placed with play on a or the guide unit (6) of the substructure (2), in particular such that the at least one processing unit (4, 5) is held by gravity.

9. Device (1) as claimed in any one of the preceding claims, **characterized in that** the device (1) has an absolute measuring device (14), in order to determine an adjustment travel of at least one processing unit (4, 5) and/or the conveyor device (3) relative to the substructure (2), in particular at least one laser measuring device (15).

10. Device (1) as claimed in any one of the preceding claims, **characterized in that** the at least one conveyor device (3) is movable relative to the substructure (2).

11. Use of a device (1) as claimed in any one of the preceding claims for producing sandwich elements of vehicles.

## Revendications

1. Dispositif (1) configuré pour la fabrication d'éléments sandwich pour des pièces de véhicules, comprenant une infrastructure (2), au moins un dispositif de transport (3) et au moins deux unités de traitement (4, 5) pour l'exécution d'étapes de fabrication d'un élément sandwich, dans lequel au moins une des unités de traitement (4, 5) est conçue comme une installation de dévidage (7) et/ou au moins une des unités de traitement (4, 5) comme une installation d'encollage (8) et
dans lequel les au moins deux unités de traitement (4, 5) sont capables de se déplacer par rapport à l'infrastructure (2), les au moins deux unités de traitement (4, 5) étant guidées dans leur déplacement sur une installation de guidage (6) de l'infrastructure (2).

2. Dispositif (1) selon la revendication 1, **caractérisé en ce que** les au moins deux unités de traitement (4, 5) sont capables de déplacement l'une par rapport à l'autre.

3. Dispositif (1) selon l'une des revendications précédentes, **caractérisé en ce que** l'au moins un dispositif de transport (3) est guidé de façon à pouvoir se déplacer sur une ou l'installation de guidage (6) de l'infrastructure (2).

4. Dispositif (1) selon l'une des revendications précédentes, **caractérisé en ce que** l'au moins un dispositif de transport (3) est conçu comme un convoyeur à courroie (9).

5. Dispositif (1) selon l'une des revendications précédentes, **caractérisé en ce que** le dispositif (1) comporte au moins un frein d'immobilisation (10), de sorte que l'au moins un dispositif de transport (3) et/ou au moins une des unités de traitement (4, 5) peuvent être fixés pour empêcher leur déplacement par rapport à l'infrastructure (2).

6. Dispositif (1) selon l'une des revendications précédentes, **caractérisé en ce que** le dispositif (1) comporte au moins un entraînement (11) pour le déplacement motorisé d'au moins une des unités de traitement (4, 5) ou des au moins deux unités de traitement (4, 5) au moyen de l'entraînement (11), en particulier dans lequel l'entraînement (11) est conçu sur l'unité de traitement (4, 5) ou stationnaire, de préférence est disposé de façon stationnaire sur l'infrastructure (2).

7. Dispositif (1) selon l'une des revendications précédentes, **caractérisé en ce qu'**au moins une des unités de traitement (4, 5) et/ou l'au moins un dispositif de transport (3) comportent un chariot de guidage (12) qui est guidé en translation le long d'un guide à roulement à billes (13) de l'infrastructure (2).

8. Dispositif (1) selon l'une des revendications précédentes, **caractérisé en ce qu'**au moins une des unités de traitement (4, 5) est posée avec un jeu sur une ou l'installation de guidage (6) de l'infrastructure (2), en particulier de telle manière que l'au moins une unité de traitement (4, 5) soit retenue par gravité.

9. Dispositif (1) selon l'une des revendications précédentes, **caractérisé en ce que** le dispositif (1) comporte un dispositif de mesure absolue (14) pour déterminer une distance de déplacement d'au moins une unité de traitement (4, 5) et/ou du dispositif de transport (3) par rapport à l'infrastructure (2), en particulier au moins un appareil de mesure par laser (15).

10. Dispositif (1) selon l'une des revendications précédentes, **caractérisé en ce que** l'au moins un dispositif de transport (3) est capable de déplacement par rapport à l'infrastructure (2).

11. Utilisation d'un dispositif (1) selon l'une des revendications précédentes pour la fabrication d'éléments sandwich pour des pièces de véhicules.
